# EUROPÄISCHE PATENTSCHRIFT

(11) **EP 4 402 861 B1**
(45) Veröffentlichungstag und Bekanntmachung des Hinweises auf die Patenterteilung: **02.09.2026**
(21) Anmeldenummer: 22785709.1
(22) Anmeldetag: 13.09.2022
(51) Int. Cl.: H04L 9/40, G06F 21/64, G06Q 30/06, G05B 19/418, G06F 21/62, G06Q 50/10

(54) **NETZWERKKNOTEN FÜR FELDGERÄTEDATEN**
NETWORK NODE FOR FIELD DEVICE DATA
NOEUD DE RÉSEAU POUR DONNÉES DE DISPOSITIFS DE TERRAIN

(30) Priorität: 13.09.2021 DE 102021123625
(43) Veröffentlichungstag der Anmeldung: 24.07.2024
(73) Patentinhaber: VEGA Grieshaber KG, 77709 Wolfach (DE)
(72) Erfinder: DIETERLE, Marcel, 77761 Schiltach (DE)
(74) Vertreter: Maiwald GmbH
(86) Internationale Anmeldenummer: PCT/EP2022/075401
(87) Internationale Veröffentlichungsnummer: WO 2023/037005

(56) Entgegenhaltungen:
- US-A1- 2020 204 375
- YA-NAN LI ET AL: "A decentralized and secure blockchain platform for open fair data trading", CONCURRENCY AND COMPUTATION: PRACTICE AND EXPERIENCE, WILEY, LONDON, GB, vol. 32, no. 7, 3 December 2019 (2019-12-03), pages n/a, XP072307379, ISSN: 1532-0626, DOI: 10.1002/CPE.5578
- MANZOOR AHSAN ET AL: "Proxy re-encryption enabled secure and anonymous IoT data sharing platform based on blockchain", JOURNAL OF NETWORK AND COMPUTER APPLICATIONS, ACADEMIC PRESS, NEW YORK, NY, US, vol. 176, 10 December 2020 (2020-12-10), XP086465544, ISSN: 1084-8045, [retrieved on 20201210], DOI: 10.1016/J.JNCA.2020.102917
- PAPADODIMAS GEORGIOS ET AL: "Implementation of smart contracts for blockchain based IoT applications", 2018 9TH INTERNATIONAL CONFERENCE ON THE NETWORK OF THE FUTURE (NOF), IEEE, 19 November 2018 (2018-11-19), pages 60 - 67, XP033490496, DOI: 10.1109/NOF.2018.8597718
- FARAHANI BAHAR ET AL: "The convergence of IoT and distributed ledger technologies (DLT): Opportunities, challenges, and solutions", JOURNAL OF NETWORK AND COMPUTER APPLICATIONS, ACADEMIC PRESS, NEW YORK, NY, US, vol. 177, 17 December 2020 (2020-12-17), XP086482806, ISSN: 1084-8045, [retrieved on 20201217], DOI: 10.1016/J.JNCA.2020.102936

## Beschreibung

Die vorliegende Anmeldung beansprucht die Priorität der deutschen Patentanmeldung Nr. 10 2021 123 625.8, eingereicht am 13. September 2021, die in vollem Umfang durch Bezugnahme in das vorliegende Dokument aufgenommen wird.

### Technisches Gebiet

Die Erfindung betrifft einen Netzwerkknoten für ein Feldgerätedatennetzwerk, ein Feldgerätedatennetzwerk, ein Nutzergerät für ein Feldgerätedatennetzwerk, ein Verfahren zum Senden eines Datenblocks mit Feldgerätedaten, und eine Verwendung eines Netzwerkknotens in einem Feldgerätedatennetzwerk.

### Stand der Technik

Daten von Feldgeräten werden üblicherweise über ein Netzwerk an einen Server gesendet, der die Daten an einen Benutzer zur Verfügung stellt. Der Benutzer verfügt über einen Client, der die Daten anfordern und abrufen kann. Die Daten können hierbei verschlüsselt sein. Vertragsangelegenheiten werden üblicherweise getrennt geregelt und durchgeführt. Solch ein System, bzw. diese Vorgehensweise ist umständlich und trotz einer Verschlüsselung unsicher. Ein anonymes Abrufen der Daten ist nicht möglich. US2020204375A1 beschreibt Systeme und Verfahren zum Austausch von Luftfahrtdaten mittels einer privaten Blockchain zwischen vordefinierten Parteien. Manzoor et al.: "Proxy reencryption enabled secure and anonymous loT data sharing platform based on blockchain", stellt einen blockchain-basierten Marktplatz für den sicheren und anonymen Austausch von loT-Daten vor. Papadodimas et al.: "Implementation of smart contracts for blockchain based loT applications", schlägt eine dezentrale Anwendung (DApp) für den Austausch von loT-Sensordaten mittels Smart Contracts auf der Ethereum-Blockchain vor. Farahani et al.: "The convergence of loT and distributed ledger technologies (DLT) : Opportunities, Challenges, and solutions" gibt einen Überblick über die Konvergenz von IoT und Distributed-Ledger-Technologien (DLT), insbesondere Blockchain. Ya-Nan Li et al: "A decentralized and secure blockchain platform for open fair data trading" beschreibt eine dezentrale, blockchainbasierte Plattform für offenen und fairen Datenhandel, bei der die Daten verschlüsselt und außerhalb der Blockchain gespeichert werden. Smart Contracts werden genutzt, um Entschlüsselungsschlüssel auszutauschen.

### Zusammenfassung der Erfindung

Daher könnte eine Aufgabe der Erfindung sein, ein verbessertes System zum Bereitstellen der Daten eines Feldgerätes an einen Nutzer bereitzustellen.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Die beschriebenen Ausführungsformen betreffen in ähnlicher Weise den Netzwerkknoten für das Feldgerätedatennetzwerk, das Feldgerätedatennetzwerk, das Nutzergerät für das Feldgerätedatennetzwerk, das Verfahren zum Senden eines Datenblocks mit Feldgerätedaten und die Verwendung eines Netzwerkknotens in einem Feldgerätedatennetzwerk. Synergieeffekte können sich aus verschiedenen Kombinationen der Ausführungsformen ergeben, obwohl sie möglicherweise nicht im Detail beschrieben werden.

Ferner ist zu beachten, dass alle Ausführungsformen der vorliegenden Erfindung, die ein Verfahren betreffen, in der beschriebenen Reihenfolge der Schritte ausgeführt werden können, jedoch muss dies nicht die einzige und wesentliche Reihenfolge der Schritte des Verfahrens sein. Die hier vorgestellten Verfahren können mit einer anderen Reihenfolge der offenbarten Schritte ausgeführt werden, ohne von der jeweiligen Verfahrensausführungsform abzuweichen, sofern im Folgenden nicht ausdrücklich etwas anderes angegeben ist.

Fachbegriffe werden mit der dem Fachmann bekannten Bedeutung verwendet. Wenn bestimmten Begriffen eine bestimmte Bedeutung verliehen wird, werden im Folgenden Definitionen von Begriffen gegeben, in deren Zusammenhang die Begriffe verwendet werden.

Gemäß einem ersten Aspekt wird ein Netzwerkknoten für ein Feldgerätedatennetzwerk bereitgestellt, der eingerichtet ist, erste Feldgerätedaten zu empfangen, die ersten Feldgerätedaten in Datenblöcken zu speichern, eine Datenblock-Anfrage einschließlich eines öffentlichen Schlüssels und digitalen Gelddaten zu empfangen, die digitalen Gelddaten zu überprüfen, und bei erfolgreicher Überprüfung die Datenblock-Anfrage durch Verschlüsseln des angefragten Datenblocks mit dem öffentlichen Schlüssel und Senden des mit dem öffentlichen Schlüssel verschlüsselten Datenblocks zu beantworten.

Ein Feldgerät kann z.B. ein Sensor oder ein Messgerät, das Umgebungsdaten erfasst und regelmäßig oder zumindest mehrmals Daten an einen Server, ein Datennetzwerk, eine Cloud, etc. sendet oder senden kann. Das Feldgerät kann im industriellen oder im öffentlichen Umfeld eingesetzt sein. Beispielsweise ist der Sensor ein Radarsensor, ein Ultraschallsensor, ein Drucksensor, ein Grenzstandsensor, ein Vibrationsgrenzschalter, etc.

Ein Feldgerät kann auch ein Aktuator sein, der z.B. seinen Status oder Betriebsdaten sendet, so dass dieser von einer entfernten Position aus überwacht werden kann.

Der Netzwerknoten empfängt somit erste Feldgerätedaten als Datenblöcke und speichert diese Datenblöcke z.B. in einer Liste oder einer Datenbank ab. Die Feldgerätedaten sind zum Beispiel Messdaten. Ein Nutzer kann gezielt Datenblöcke anfragen und sendet in dieser Anfrage digitale Gelddaten für jeden dieser Datenblöcke und einen öffentlichen Schlüssel, so dass der Netzwerkkoten die angefragten Datenblöcke damit verschlüsseln kann. Durch die digitalen Gelddaten kann im Prinzip jeder zahlende Nutzer ihn interessierende Datenblöcke anfordern und mit der Anfrage bezahlen. Eine weitere Überprüfung der Authentifizierung oder Identität des Nutzers kann vorgenommen werden, muss jedoch nicht. Somit können die Daten anonym von jedem interessierten Nutzer angefordert und verschlüsselt erhalten werden, und der Nutzer bezahlt die Daten. Es kann ein Kommunikationsprotokoll implementiert sein, das eine vorhergehende Abfrage an vorhandenen Datenblöcken und des Preises vorsieht. Diese Informationen können aber auch allgemein bekannt sein.

Der Netzwerkknoten kann direkt mit dem Feldgerät verbunden sein oder über ein Zwischengerät wie beispielsweise einen Router oder andere Geräte zur Datenweiterleitung mit oder ohne Protokollumsetzung sein. Die Daten können beispielsweise auch über ein Prozessleitsystem oder einem Messserver von dem Feldgerät zu dem Netzwerkknoten gelangen.

Die Anfrage beinhaltet in Ausführungsformen eine selektive Datenblockanfrage, d.h. eine Anfrage über einzelne und einzeln identifizierbare Datenblöcke, so dass die Anfrage also eine Auswahl unter der Gesamtheit an verfügbaren Datenblöcken beinhaltet. Die Auswahl kann auch die Gesamtheit an verfügbaren Datenblöcken sein. Die Datenblöcke können beispielsweise einmalig oder über einen Zeitraum verteilt an den Nutzer gesendet werden.

Der Netzwerkknoten ist von dem Feldgerät verschieden und selbst kein Feldgerät. Der Netzwerkknoten ist ein beispielsweise ein Datengerät in dem Datennetzwerk, das einen oder mehrere Prozessoren aufweist, die z.B. mit einem Betriebssystem ausgestattet sind, einen Datenspeicher und/oder eine Datenbank aufweist sowie Schnittstellen und Schaltkreise zur Kommunikation mit dem Feldgerät und des Weiteren zur Kommunikation mit einem Nutzergerät, z.B. eines Nutzers, der Daten von dem Betreiber oder Eigentümer der Feldgeräte erwerben möchte. Der Netzwerkknoten kann z.B. ein Datengerät in der Cloud sein und mit weiteren Netzwerkknoten verbunden sein. Beispiele für einen solchen Netzwerkknoten sind ein Rechner, ein Mobilfunkendgerät, ein Laptop, ein Tablet, etc.,

Die Schnittstelle zwischen Feldgerät und Netzwerkknoten kann z.B. eine digitale Schnittstelle oder eine analoge Schnittstelle sein. Z.B. ist die Schnittstelle eine Feldbusschnittstelle, eine Ethernet oder EtherCAT-Schnittstelle, drahtlos-Schnittstelle wie beispielsweise WLAN oder Bluetooth, eine Mobilfunk-Schnittstelle zu beispielsweise einem 3G, 4G, 5G, LTE-Netzwerk, eine LoRa-Schnittstelle, eine HART-Schnittstelle oder eine sonstige dem Fachmann bekannte Schnittstelle.

Die Datenblöcke werden somit nicht in einem oder mehreren Feldgeräten gespeichert, sondern in dem Netzwerkknoten, der die Anfrage entgegennimmt und mit dem Senden der angefragten Datenblöcke antwortet. Der Nutzer hat hierbei keinen Zugriff auf den Netzwerkknoten und damit auch nicht auf die Datenblöcke. Der Nutzer kann sich daher nicht aktiv die Datenblöcke aus dem Netzwerkknoten holen, sondern sie werden ihm gesendet. Das Senden unternimmt somit der Netzwerkknoten, der auch für die Verschlüsselung zuständig ist. Somit werden die Feldgerätedaten in den Datenblöcken in dem Netzwerkknoten sicher aufbewahrt und durch die Verschlüsselung mit dem öffentlichen Schlüssel des Nutzers, der in der Anfrage mitgesendet wird, nur dem Nutzer ohne einen Zugriff auf den Netzwerkknoten zugänglich gemacht. Eine Zugangsverwaltung ist daher nicht erforderlich, wodurch die Sicherheit erhöht wird.

Mit der Anfrage und dem darin enthaltenen Senden der digitalen Gelddaten wird bei erfolgreicher Überprüfung automatisch ein Vertrag geschlossen. Der Name des Käufers, z.B. eine Firma, eine Behörde oder eine Person, muss hierbei nicht bekannt sein.

Digitale Gelddaten sind z.B. Daten einer Kryptowährung, wodurch der Käufer anonym bleiben kann. Unter digitalen Gelddaten kann aber auch eine klassische digitale Überweisung verstanden werden, bei der Senderdaten und Bankdaten sichtbar sind.

Der Netzwerkknoten ist daher eingerichtet, Datenempfänger und Datenquelle von Feldgerätedaten zu sein und gleichzeitig automatisierte Verwaltungsaufgaben zu übernehmen.

Gemäß einer Ausführungsform ist der Netzwerkknoten ein Netzwerkknoten eines Blockchain-Netzwerks und speichert die Datenblöcke in der Blockchain verschlüsselt.

Die Blockchain erlaubt das verschlüsselte dezentrale Speichern der Feldgerätedaten in Datenblöcken, z.B. in einer Liste. Damit steht der Netzwerkknoten repräsentativ für einen beliebigen Netzwerkknoten in dem Blockchain-Netzwerk.

Gemäß einer Ausführungsform ist der Netzwerkknoten eingerichtet, zweite Feldgerätedaten zur Identifizierung der in den Blöcken abgespeicherten ersten Feldgerätedaten zu empfangen und die zweiten Feldgerätedaten unverschlüsselt mit den ersten Feldgerätedaten zu speichern, und wobei die zweiten Feldgerätedaten für die Erzeugung einer Datenblockanfrage öffentlich sichtbar sind.

Die zweiten Feldgerätedaten zur Identifizierung der in den Blöcken abgespeicherten ersten Feldgerätedaten können beispielsweise Daten zur Identifizierung einer Messung, einer Messstelle und/oder ein Zeitstempel sein, die das Feldgerät an den Netzwerkknoten sendet. Weiterhin können die Daten optional zusätzlich Daten, die den Preis definieren, enthalten. Somit kann ein Nutzer durch diese Informationen die gewünschten Datenblöcke auswählen und den entsprechenden Geldbetrag senden. Die Daten bzw. vorhandenen Datenblöcke können entweder vor der Anfrage abgefragt werden und in der Anfrage angefordert werden, oder können im Voraus angefragt werden. In diesem Fall sendet der Netzwerkknoten die entsprechenden ersten Feldgerätedaten, sobald er diese vom Feldgerät empfangen hat und als Datenblöcke gespeichert hat.

Zur Auswahl der Datenblöcke können diese vom Netzwerkknoten mit einer ID versehen werden, so dass das Nutzergerät in der Anfrage diese ID senden. Die ID kann auch z.B. ein Hashwert aus z.B. den zweiten Feldgerätedaten sein.

Gemäß einer Ausführungsform ist die Datenblock-Anfrage eine Blockchain-Transaktion, die einen Geldbetrag und den öffentlichen Schlüssel enthält.

Das heißt, die Gelddaten sind Transaktionsdaten der Blockchain. Die Transaktion kann beispielsweise eine Transaktion einer Kryptowährung sein. Der Geldbetrag kann somit völlig anonym an den Netzwerkknoten gesendet werden. Der Netzwerkknoten kann weiterhin die Gelddaten als Blockchain-Transaktion an einen Empfänger, z.B. den Betreiber des Feldgeräts weiterleiten.

Gemäß einer Ausführungsform ist der Netzwerkknoten ferner eingerichtet, einen in den digitalen Gelddaten enthaltenen Geldbetrag zu prüfen und erst bei einer Richtigkeit des Geldbetrags den angefragten Datenblock zu verschlüsseln und mit den empfangenen öffentlichen Schlüssel zu verschlüsseln und zu senden, wobei, im Falle, dass der Datenblock in der Blockchain verschlüsselt gespeichert ist, der Netzwerkknoten eingerichtet ist, den angefragten Datenblock zunächst zu entschlüsseln, und danach den entschlüsselten Datenblock mit dem empfangenen öffentlichen Schlüssel zu verschlüsseln und als Antwort auf die Datenblockanfrage zu senden.

Der in den empfangenen Gelddaten enthaltene Geldbetrag wird mit dem für den Datenblock zu zahlenden Geldbetrag in dem Netzwerkknoten verglichen. Nur bei Übereinstimmung wird der Datenblock zum Entschlüsseln und zum Senden an das Nutzergerät freigegeben. Der Geldbetrag kann auch Null sein, so dass die Daten frei verfügbar sind, wobei eventuell eine Berechtigung des Nutzers bzw. Nutzergeräts geprüft wird. Datenblöcke, für die kein Geldbetrag verlangt wird, können auch unverschlüsselt in der Blockchain gespeichert werden.

Gemäß einer Ausführungsform ist der Netzwerkknoten ferner eingerichtet, mit der Datenblockanfrage Authentifizierungsdaten zu empfangen und zu prüfen, und nur bei erfolgreicher Authentifizierung den Datenblock mit dem öffentlichen Schlüssel zu verschlüsseln und zu senden.

Zur Überprüfung der Berechtigung kann ein Authentifizierungsmechanismus implementiert sein, bei dem das Nutzergerät Daten für die Authentifizierung sendet. Hierbei kann beispielsweise eine Public-Key-Authentifizierung eingesetzt werden, so dass der öffentliche Schlüssel die Authentifizierungsdaten darstellt ein keine zusätzlichen Authentifizierungsdaten erzeugt und gesendet werden müssen.

Gemäß einer Ausführungsform ist der Netzwerkknoten ferner eingerichtet, eine Vielzahl von Datenblöcken in der Blockchain zu verschlüsseln, und eine Vielzahl von Datenblöcken in der Blockchain nicht zu verschlüsseln, wobei nur für die in der Blockchain verschlüsselten Datenblöcke der Geldbetrag geprüft wird.

Im Vergleich zur weiter oben beschriebenen Variante mit unverschlüsselten Datenblöcken, wird in dieser Ausführungsform auf die Überprüfung verzichtet. Beispielsweise kann sich ein Nutzergerät anmelden und automatisch alle unverschlüsselten oder alle vorher nach z.B. einer Regel, wie Frequenz, Zeitspanne oder Messgerät, unverschlüsselten Datenblöcke empfangen.

Gemäß einer Ausführungsform ist der Netzwerkknoten ferner eingerichtet, eine Datenblockanfrage von einem Nutzer oder mehrere Datenblockanfragen für denselben Datenblock von mehreren Nutzern zu empfangen.

Derselbe Datenblock kann von einem oder mehreren Nutzern angefragt und an diese gesendet werden. Es ist somit möglich, die bereitgestellten Daten mehrfach zu verkaufen.

Gemäß einer Ausführungsform weist der Netzwerkknoten ferner eine Recheneinheit auf, auf der ein Smart Contract zumindest das Speichern der Datenblöcke, das Überprüfen des Geldbetrages, des entschlüsseln der gespeicherten Datenblöcke in der Blockchain und das Verschlüsseln der angefragten Datenblöcke durchführt.

Unter einem Smart Contract, im Deutschen auch "intelligentem Vertag" genannt, wird ein autonomes, in einer Blockchain (z.B. Ethereum) laufendes Programm, verstanden, welches definierte Funktionen und Workflows sicher ausführen kann. Über ein solches Programm können per Transaktion Daten oder Zahlungen angenommen und darauf basierende Funktionen (z.B. Ausführen einer Datenübermittlung) ausgeführt werden. Ein Smart Contract wird einmalig "installiert" und läuft ab diesem Zeitpunkt vollkommen autonom. Zudem arbeiten Smart Contracts nicht mit externen Datenquellen, sondern lediglich auf Basis der Informationen innerhalb der eigenen Blockchain und sind somit fälschungssicher. Der Netzwerkknoten repräsentiert somit einen beliebigen Netzwerkknoten in dem Blockchain-Netzwerk, auf dem der Smart Contract-Code ausgeführt wird.

Gemäß einem weiteren Aspekt wird ein Feldgerätedatennetzwerk bereitgestellt, das einen hier beschriebenen Netzwerkknoten, ein Feldgerät, und ein Nutzergerät aufweist, wobei das Feldgerät eingerichtet ist, erste Feldgerätedaten an den Netzwerkknoten zu senden. Das Nutzergerät ist eingerichtet, eine Datenblockanfrage an den Netzwerkknoten zu senden und als Antwort einen mit einem öffentlichen Schlüssel des Nutzergeräts verschlüsselten angefragten Datenblock zu empfangen, und den empfangen Datenblock mit dem privaten Schlüssel des Nutzergeräts zu entschlüsseln.

Das Feldgerät kann weiterhin eingerichtet sein, die bereits beschriebenen zweiten Feldgerätedaten an den Netzwerkknoten zu senden.

Gemäß einer Ausführungsform ist das Nutzergerät ferner eingerichtet, zweite Feldgerätedaten von dem Netzwerkknoten abzufragen, und basierend auf den abgefragten zweiten Feldgerätedaten eine Datenblockanfrage zu erzeugen und an den Netzwerkknoten zu senden.

Gemäß einer Ausführungsform ist das Nutzergerät ferner eingerichtet, einen angefragten Datenblock zu empfangen und mit einem privaten Schlüssel zu entschlüsseln.

Gemäß einem weiteren Aspekt wird ein Verfahren zum Senden eines Datenblocks mit Feldgerätedaten bereitgestellt, das folgende Schritte in einem Netzwerkknoten aufweist: Empfangen erster Feldgerätedaten, Speichern der ersten Feldgerätedaten in Datenblöcken, Empfangen einer Datenblock-Anfrage einschließlich eines öffentlichen Schlüssels und digitalen Gelddaten, Überprüfen der digitalen Gelddaten, und bei erfolgreicher Überprüfung der digitalen Gelddaten die Datenblock-Anfrage Verschlüsseln des angefragten Datenblocks mit dem öffentlichen Schlüssel und Senden des mit dem öffentlichen Schlüssel verschlüsselten Datenblocks.

Gemäß einem weiteren Aspekt wird eine Verwendung eines hier beschriebenen Netzwerkknotens für ein hier beschriebenes Feldgerätedatennetzwerk bereitgestellt. Insbesondere kann der Netzwerkknoten ein Netzwerkknoten einer Blockchain sein, auf dem ein Smart Contract ausgeführt wird.

Die beschriebene Erfindung ermöglicht einen beidseitig anonymen Handel mit Feldgerätedaten, beispielsweise Messwerten wie Füllstand, Druck Temperatur, Durchfluss, Massenstrom oder Diagnosedaten von Feldgeräten, über beispielsweise eine Blockchain, wobei sowohl der Besitzer oder Betreiber des Feldgerätes, als auch die Käufer der Daten anonym bleiben können. Die Feldgerätedaten können an einen oder mehrere Nutzer verkauft werden. Die Regeln und Vertragsbedingungen können als Programmcode hart kodiert werden, ohne dass auf variable, externe Konfigurationsdaten zugegriffen wird. Ist ein solcher Smart Contract einmal installiert, verläuft die gesamte Abwicklung der Bezahlung und Übertragung von Daten autonom und sicher über diesen Smart Contract. Der Smart Contract erlaubt autonome Transaktionsabläufe. Es können zudem unterschiedliche Nutzungsmodelle wie beispielsweise Abonnement, Exklusivnutzung oder Mehrfachverkauf realisiert werden. Auch die Bereitstellung der Daten kann anonym erfolgen. Das heißt, dass jeder Betreiber eines Feldgeräts in dem Netzwerk Feldgerätedaten wie z.B. Sensordaten zum Kauf anbieten kann, und somit nicht nur Hersteller. Die Speicherung der Daten erfolgt in einer dezentralen und fälschungssicheren Datenbank, wie z.B. einer Blockchain.

Die Übertragung an den Nutzer bzw. das Nutzergerät erfolgt sicher durch eine verschlüsselte Datenübertragung. Verschiedene Lizenzmodelle sind möglich, wie beispielsweise ein sogenanntes "Freemium"-Modell, ein Abonnement oder eine Exklusivnutzung. Die Modelle werden weiter unten in der Beschreibung erläutert. Die Erfindung kann beispielsweise zur Überwachung natürlicher Größen wie Wasserstände, Flusspegel, Gletscherentwicklungen, Temperatur, Luftdruck eingesetzt werden oder zur Überwachung von öffentlichen Behältern wie z.B.: Füllstände in Streusalzbehältern, mobile Toiletten, Tankanlagen, Müllcontainern, Glascontainern, Altkleidercontainern. Die möglichen Anwendungen sind jedoch nicht auf diese Beispiele begrenzt. Die Erfindung bezieht sich nicht nur auf öffentliche Anwendungen, sondern kann für jegliche Feldgeräte-Anwendungen zum Einsatz kommen. Die oben genannten Anwendungsbereiche sind lediglich beispielhaft.

Der Smart Contract sowie weitere Funktionen können als Computerprogrammelemente implementiert werden. Die Computerprogrammelemente können Teil eines Computerprogramms sein, es kann jedoch auch ein ganzes Programm für sich sein. Beispielsweise kann das Computerprogrammelement verwendet werden, um ein bereits vorhandenes Computerprogramm zu aktualisieren, um zur vorliegenden Erfindung zu gelangen.

Das Computerprogramm ist auf einem computerlesbaren Medium gespeichert. Das computerlesbare Medium kann als ein Speichermedium angesehen werden, wie beispielsweise ein USB-Stick, eine CD, eine DVD, ein Datenspeichergerät, eine Festplatte oder ein beliebiges anderes Medium, auf dem sich ein Programmelement wie oben beschrieben befinden kann.

### Kurze Beschreibung der Figuren

Im Folgenden werden Ausführungsbeispiele der Erfindung anhand der schematischen Zeichnungen näher erläutert. Hierbei zeigt
Fig. 1 zeigt ein Blockdiagramm eines Feldgerätedatennetzwerks,
Fig. 2 zeigt ein Diagramm zur Erläuterung des Speicherns von Datenblöcken,
Fig. 3 zeigt ein Diagramm zur Erläuterung des Abrufens von Datenblöcken,
Fig. 4 zeigt ein Ablaufdiagramm eines Verfahrens zum Senden eines Datenblocks mit Feldgerätedaten.

### Ausführungsformen

Einander entsprechende Teile sind in allen Figuren mit den gleichen Bezugszeichen versehen.

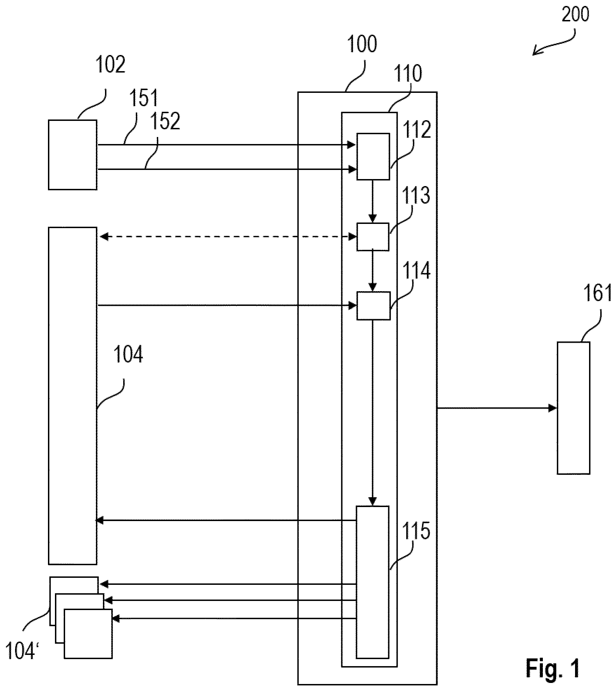

Fig. 1 zeigt ein Blockdiagramm eines Feldgerätedatennetzwerks 200 mit einem Netzwerkknoten 100, der mit einem Feldgerät 102 verbunden ist. Das Feldgerät muss hierbei nicht direkt mit dem Netzwerkknoten 100 verbunden sein, sondern kann auch über weitere Netzwerkelemente, wie z.B. einem Router oder Kommunikationsgeräte eines Mobilfunksystems, eines Drahtlossystems, eines drahtgebundenen Datenkommunikationssystems, etc. verbunden sein.

Das Feldgerät sendet beispielsweise erste Feldgerätedaten 151, wie z.B. Messwerte oder einen Gerätestatus sowie zweite Feldgerätedaten 152, wie z.B. eine ID der Messung und der Messstelle, einen Zeitstempel, einen Mess-Ort, einen Messstellennamen und optional einen Preis an den Netzwerkknoten 100.

Das Feldgerätedatennetzwerk 200 ist weiterhin mit einem Nutzergerät 104 verbunden, das wie das Feldgerät ebenfalls über Zwischenstationen mit dem Netzwerkknoten 100 verbunden sein kann. Das Nutzergerät 104 kann weiterhin erst dann Teil des Feldgerätedatennetzwerks 200 sein, wenn sich das Nutzergerät 104 mit dem Netzwerkknoten 100 verbindet. Der Netzwerkknoten 100 kann beispielsweise Netzwerkknoten eines Blockchain-Netzwerks sein. Weitere Nutzergeräte 104' können an den Netzwerkknoten 100 angeschlossen sein. Weiterhin zeigt das Blockdiagramm einen weiteren Netzwerkknoten 161, an den der Netzwerkknoten 100 Blockchain-Transaktionen senden kann.

Zur Verdeutlichung der Funktionen sind in dem Blockdiagramm für den Netzwerkknoten 100 verschiedene funktionale Einheiten 112 ... 115 eingezeichnet, die Teil des Smart Contracts 110 sind. So ist mit der Einheit 112 eine Empfangseinheit und Enkodiereinheit 112 dargestellt, die zumindest einen Teil der Daten, die das Feldgerät 102 an den Netzwerkknoten 100 sendet, empfängt, kodiert und in einem Speicher 113 bzw. einer Datenbank 113 als Blockchain-Liste speichert. Das Nutzergerät 104 kann Einträge in der Blockchain-Liste in der Datenbank 113 abfragen, und die unverschlüsselten Informationen wie ID der Messung, Preis etc. abfragen, so dass es gezielt Käufe bezüglich eines oder mehrerer Datenblöcke durch entsprechende Anfragen kaufen kann. Hierzu sendet das Nutzergerät 104 Gelddaten und z.B. eine ID des Datenblocks, der Messung, etc. in Form einer Blockchain-Transaktion an den Netzwerkknoten, der in der Funktionseinheit 114 Prüfungen bezüglich des in der Transaktion ausgewiesenen Geldbetrags, des Vorhandenseins der angefragten Messung, evtl. der Authentizität des Nutzergeräts, etc. vornimmt, und entsprechend eines Ergebnisses der Prüfung die Datenblöcke dekodiert und an den Enkodierer 115 schickt, der die Datenblöcke mit einem privaten Schlüssel des Nutzergeräts 104 bzw. des Nutzers enkodiert und an das Nutzergerät 104 und/oder weitere Nutzergeräte 104' sendet. Gleichzeitig sendet der Netzwerkknoten 100 den Geldbetrag durch eine Blockchain-Transaktion 160 weiter an z.B. den weiteren Blockchain-Netzwerkknoten 161 bzw. an den Betreiber des Feldgeräts 102, so dass dieser in den Besitz des Geldbetrags gelangt.

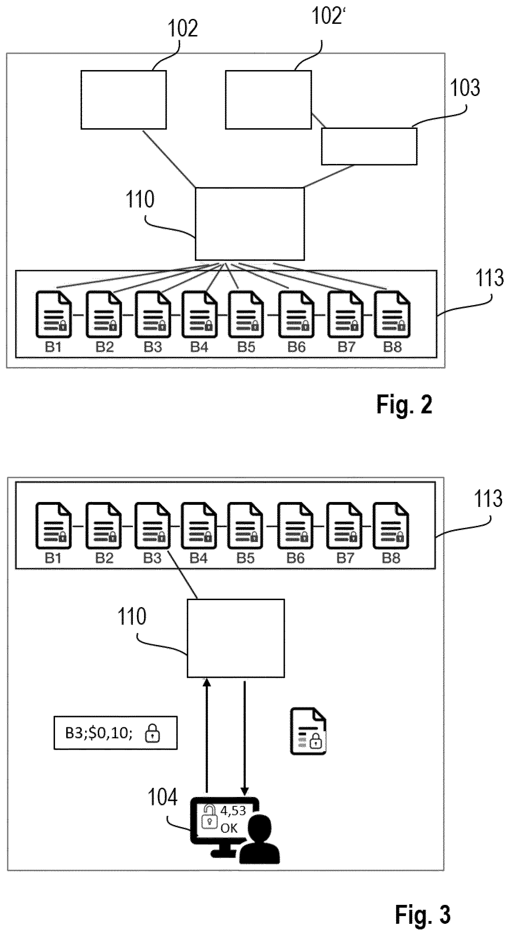

Die Figuren 2 und 3 illustrieren detaillierter einzelne Vorgänge.

Fig. 2 zeigt ein Blockdiagramm mit zwei Feldgeräten 102, 102', wobei das zweite Feldgerät 102' über einen Router 103 mit dem Smart Contract 110 verbunden ist. Der Smart Contract 110 speichert die von den Feldgeräten 102, 102' empfangenen Daten als einzelne Blöcke (B1-B8) in der Datenbank 113 der Blockchain, wobei der kostenpflichtige Teil der Daten verschlüsselt wird.

Fig. 3 zeigt ein Blockdiagramm mit einem Nutzer 300 und einem Nutzergerät 104. Das Nutzergerät 104 sendet eine Datenblock-Anfrage 301 über einen Datenblock (B3) mit Kaufpreis und eigenem öffentlichen Schlüssel (Public Key). Der Smart Contract 110 ruft die Daten aus der Blockchain ab 302 und validiert den Kaufpreis. Der Smart Contract 110 verschlüsselt den Datenblock mit dem Public Key des Nutzers 102 und sendet 303 den verschlüsselten Datenblock an das Nutzergerät 104. Das Nutzergerät 104 erhält den Datenblock B3 und kann ihn mit dem eigenen privaten Schlüssel (Private Key) entschlüsseln 304 und hat somit Zugriff auf die Daten.

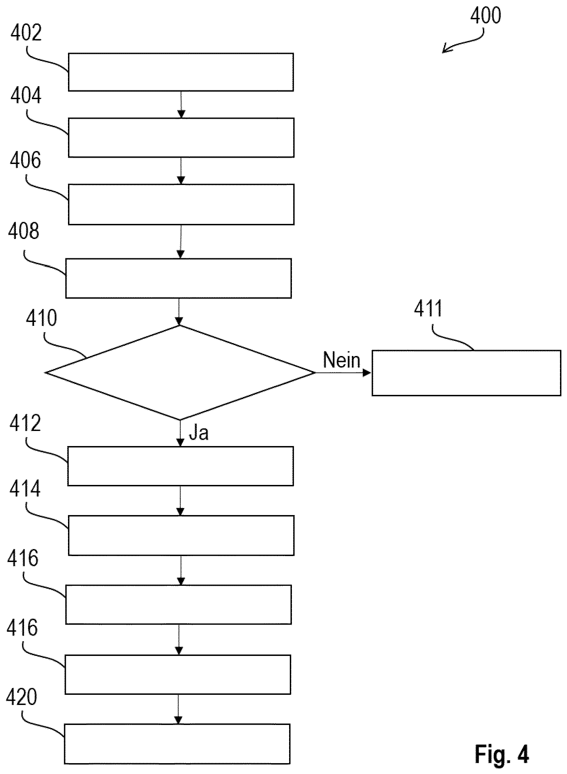

Fig. 4. zeigt ein Flussdiagramm des Verfahrens 400 zum Senden eines Datenblocks mit Feldgerätedaten.

In einem ersten Schritt 402 werden erste und zweite Feldgerätedaten von einem Feldgerät 102 bereitgestellt und an eine Blockchain in einem Netzwerkknoten gesendet. In einem zweiten Schritt 404 empfängt der Netzwerkknoten die ersten und zweiten Feldgerätedaten und speichert diese in einem dritten Schritt 406 als Liste in einer Datenbank in der Blockchain. Die ersten Feldgerätedaten sind zahlungspflichtige Daten und werden hierbei von dem Smart Contract 110, einem auf der Blockchain laufenden Programm, verschlüsselt. Zudem kann pro Datenblock der erforderliche Preis hinterlegt werden. Alternativ kann dieser generell für alle Datenblöcke im Smart Contract hinterlegt sein. Um einen Datenblock zu kaufen, überweist ein Interessent per Blockchain-Transaktion den im Datenblock oder Smart Contract hinterlegten Kaufpreis zusammen mit der ID des Datenblocks bzw. Datenpakets an den Smart Contract. Diese Transaktion mit den genannten Daten werden in Schritt 408 von dem Netzwerkknoten 100 empfangen. Im Schritt 410 prüft der Netzwerkknoten 100, bzw. der Smart Contract in dem Netzwerkknoten, ob der Betrag dem Kaufpreis entspricht, und ggf. beispielsweise, ob die Adresse des Käufers für den Kauf berechtigt ist. Ist eine der Vorgaben nicht gegeben, wird die Transaktion in Schritt 411 abgelehnt. Sind alle Vorgaben erfüllt, entschlüsselt der Smart Contract den Datenblock in Schritt 412 und verschlüsselt ihn in Schritt 414 erneut mit dem Public Key des Käufers, um ihn in Schritt 416 an dessen Adresse zu senden. Der an den Smart Contract gesendete Kaufpreis der Daten wird im Anschluss in Schritt 418 an den Datenlieferanten ebenfalls per Blockchain-Transaktion gesendet. Dieser Schritt kann auch an anderer Stelle erfolgen. Nach erfolgreicher Transaktion kann der Käufer den erhaltenen Datenblock in Schritt 420 mit seinem Private Key entschlüsseln und hat Zugriff auf die darin enthaltenen Daten. Die Schritte 404 bis 416 werden in dem Netzwerkknoten 100 durchgeführt.

Nachfolgend werden unterschiedliche Modelle beschrieben, die in dem Smart Contract implementiert sein können.

Mehrfachverkauf: Da lediglich der Käufer die empfangenen Daten aus der Blockchain entschlüsseln und einsehen kann, können vorhandene Datenpakete beliebig oft an unterschiedliche Nutzer verkauft werden.

"Freemium-Modell": Anstatt jeden Datenblock zu verschlüsseln, können diese beispielsweise in einer bestimmten Frequenz (z.B. jedes 100te Paket) unverschlüsselt in der Blockchain gespeichert werden. Somit hätten Interessenten die Möglichkeit, Einsicht in einen kleinen Teil der ermittelten Daten zu haben, ohne dafür zu bezahlen. Erst wenn ein Interessent eine höhere Qualität/Frequenz möchte, kann diese durch die Bezahlung der übrigen Daten erreicht werden.

"Exklusiv-Nutzung": Hierbei wird ein Datenblock, bzw. Datenpaket nur einmalig oder in limitierter Anzahl verkauft. Hierfür kann beispielsweise ein "Exklusiv-Kaufpreis" im Smart Contract hinterlegt werden. Sobald dieser von einem oder der maximalen Anzahl von Interessenten bezahlt wurde, kann das Datenpaket nicht mehr an andere Interessenten übertragen werden. Alle weiteren Transaktionen für dieses Paket würden dann abgelehnt werden.

"Abonnement -Modell": Hierbei kann ein Smart Contract beispielsweise so implementiert sein, dass dieser die Bezahlung und Übermittlung mehrerer Datenpakete auf einmal unterstützt. Die angeforderten Datenpakete können entweder bereits existieren oder erst in der Zukunft generiert werden. Somit könnten Nutzer z.B. ein Abonnement über einen festgelegten Zeitraum bzw. einer festgelegten Anzahl und Frequenz an Datenpaketen abschließen. Hierfür müsste beispielsweise der Kaufpreis x Anzahl gewünschter Datenpakete im Voraus bezahlt werden. Über die Angabe der Frequenz (z.B. jedes 2. oder 10. Datenpaket oder ein Paket pro Stunde oder Tag) kann der Smart Contract dann automatisch die gewünschten Pakete übermitteln, bis das hinterlegte Guthaben aufgebraucht ist. Zur Absicherung des Guthabens (z.B. wenn keine neuen Daten mehr generiert werden) könnte eine Möglichkeit zur Stornierung oder eine maximale Laufzeit des Vertrages implementiert werden, welche das übrige Guthaben an den Abonnenten zurück überweist.

Andere Variationen der offenbarten Ausführungsformen können vom Fachmann bei der Durchführung der beanspruchten Erfindung durch das Studium der Zeichnungen, der Offenbarung und der beigefügten Ansprüche verstanden und ausgeführt werden. In den Ansprüchen schließt das Wort "umfassend" andere Elemente oder Schritte nicht aus, und der unbestimmte Artikel "ein" oder "eine" schließt eine Vielzahl nicht aus. Ein einzelner Prozessor oder eine andere Einheit kann die Funktionen mehrerer Gegenstände oder Schritte erfüllen, die in den Ansprüchen aufgeführt sind. Die bloße Tatsache, dass bestimmte Maßnahmen in voneinander abhängigen Ansprüchen angegeben sind, bedeutet nicht, dass eine Kombination dieser Maßnahmen nicht vorteilhaft genutzt werden kann. Ein Computerprogramm kann auf einem geeigneten Medium wie einem optischen Speichermedium oder einem Halbleitermedium, das zusammen mit oder als Teil einer anderen Hardware geliefert wird, gespeichert / verteilt werden, kann aber auch in anderen Formen, beispielsweise über das Internet oder andere drahtgebundene oder drahtlose Telekommunikationssysteme verteilt sein. Bezugszeichen in den Ansprüchen sollten nicht so ausgelegt werden, dass sie den Umfang der Ansprüche begrenzen.

## Patentansprüche

1. Netzwerkknoten (100) für ein Feldgerätedatennetzwerk (200), wobei der Netzwerkknoten (100) eingerichtet ist,
erste Feldgerätedaten zu empfangen;
die ersten Feldgerätedaten in Datenblöcken zu speichern,
und **dadurch gekennzeichnet, dass** der Netzwerkknoten (100) eingerichtet ist,
eine Datenblock-Anfrage einschließlich eines öffentlichen Schlüssels und digitalen Gelddaten zu empfangen;
die digitalen Gelddaten zu überprüfen, und
bei erfolgreicher Überprüfung die Datenblock-Anfrage durch Verschlüsseln des angefragten Datenblocks mit dem öffentlichen Schlüssel und Senden des mit dem öffentlichen Schlüssel verschlüsselten Datenblocks zu beantworten.

2. Netzwerkknoten (100) nach Anspruch 1, wobei der Netzwerkknoten (100) ein Netzwerkknoten eines Blockchain-Netzwerks ist und die Datenblöcke verschlüsselt in der Blockchain speichert.

3. Netzwerkknoten (100) nach Anspruch 1 oder 2, wobei der Netzwerkknoten (100) eingerichtet ist, zweite Feldgerätedaten zur Identifizierung der in den Blöcken abgespeicherten ersten Feldgerätedaten zu empfangen und die zweiten Feldgerätedaten unverschlüsselt mit den ersten Feldgerätedaten zu speichern; und wobei die zweiten Feldgerätedaten für die Erzeugung einer Datenblockanfrage öffentlich sichtbar sind.

4. Netzwerkknoten (100) nach einem der vorhergehenden Ansprüche, wobei die Datenblock-Anfrage eine Blockchain-Transaktion ist, die einen Geldbetrag und den öffentlichen Schlüssel enthält.

5. Netzwerkknoten (100) nach einem der vorhergehenden Ansprüche, wobei der Netzwerkknoten (100) ferner eingerichtet ist, einen in den digitalen Gelddaten enthaltenen Geldbetrag zu prüfen und erst bei einer Richtigkeit des Geldbetrags den angefragten gespeicherten Datenblock mit dem empfangenen öffentlichen Schlüssel zu verschlüsseln und zu senden, wobei im Falle, dass der Datenblock in der Blockchain verschlüsselt gespeichert ist, der Netzwerkknoten eingerichtet ist, den angefragten Datenblock zunächst zu entschlüsseln, und danach den entschlüsselten Datenblock mit dem empfangenen öffentlichen Schlüssel zu verschlüsseln und als Antwort auf die Datenblockanfrage zu senden.

6. Netzwerkknoten (100) nach Anspruch 5, wobei der Netzwerkknoten (100) ferner eingerichtet ist, mit der Datenblockanfrage Authentifizierungsdaten zu empfangen und zu prüfen und nur bei erfolgreicher Authentifizierung den Datenblock mit dem öffentlichen Schlüssel zu verschlüsseln und zu senden.

7. Netzwerkknoten (100) nach einem der vorhergehenden Ansprüche, wobei der Netzwerkknoten eingerichtet ist, eine Vielzahl von Datenblöcken in der Blockchain zu verschlüsseln, und eine Vielzahl von Datenblöcken in der Blockchain nicht zu verschlüsseln; und wobei nur für die in der Blockchain verschlüsselten Datenblöcke der digitale Geldbetrag geprüft wird.

8. Netzwerkknoten (100) nach einem der vorhergehenden Ansprüche, wobei der Netzwerkknoten (100) eine Datenblockanfrage von einem Nutzer oder mehrere Datenblockanfragen für denselben Datenblock von mehreren Nutzern empfängt.

9. Netzwerkknoten (100) nach einem der vorhergehenden Ansprüche, wobei der Netzwerkknoten (100) eine Recheneinheit aufweist, auf der ein Smart Contract (110) ausgeführt wird, und wobei der Smart Contract (110) zumindest das Speichern der Datenblöcke, das Überprüfen des digitalen Geldbetrages, das Entschlüsseln der gespeicherten Datenblöcke in der Blockchain und das Verschlüsseln der angefragten Datenblöcke durchführt.

10. Feldgerätedatennetzwerk (200), aufweisend
einen Netzwerkknoten (100) nach einem der Ansprüche 1 bis 9;
ein Feldgerät (102, 102'); und ein
Nutzergerät (104); wobei
das Feldgerät (102, 102') eingerichtet ist, erste Feldgerätedaten und zweite Feldgerätedaten an den Netzwerkknoten (100) zu senden; und
das Nutzergerät (104) eingerichtet ist, eine Datenblockanfrage an den Netzwerkknoten (100) zu senden und als Antwort einen mit einem öffentlichen Schlüssel des Nutzergeräts (104) verschlüsselten angefragten Datenblocks zu empfangen, und den empfangen Datenblock mit dem privaten Schlüssel des Nutzergeräts (104) zu entschlüsseln.

11. Feldgerätedatennetzwerk (200) nach Anspruch 10, wobei das Nutzergerät (104) weiterhin eingerichtet ist, zweite Feldgerätedaten von dem Netzwerkknoten (100) abzufragen, und basierend auf den abgefragten zweiten Feldgerätedaten eine Datenblockanfrage zu erzeugen und an den Netzwerkknoten (100) zu senden.

12. Feldgerätedatennetzwerk (200) nach Anspruch 10 oder 11, wobei das Nutzergerät weiterhin eingerichtet ist, einen angefragten Datenblock zu empfangen und mit einem privaten Schlüssel zu entschlüsseln.

13. Verfahren (400) zum Senden eines Datenblocks mit Feldgerätedaten, aufweisend die Schritte in einem Netzwerkknoten (100):
Empfangen (404) erster Feldgerätedaten;
Speichern (406) der ersten Feldgerätedaten in Datenblöcken,
und **gekennzeichnet durch** die Schritte:
Empfangen (408) einer Datenblock-Anfrage einschließlich eines öffentlichen Schlüssels und digitalen Gelddaten;
Überprüfen (410) der digitalen Gelddaten, und
bei erfolgreicher Überprüfung der digitalen Gelddaten Verschlüsseln (414) des angefragten Datenblocks mit dem öffentlichen Schlüssel und
Senden (416) des mit dem öffentlichen Schlüssel verschlüsselten Datenblocks.

14. Verwendung eines Netzwerkknotens (100) nach einem der Ansprüche 1 bis 9 in einem Feldgerätedatennetzwerk (200) nach einem der Ansprüche 10 bis 12.

## Claims

1. A network node (100) for a field device data network (200), wherein the network node (100) is configured to
receive first field device data;
store the first field device data in data blocks, and **characterized in that** the network node (100) is configured to
receive a data block request including a public key and digital currency data;
verify the digital currency data, and
upon successful verification, to respond to the data block request by encrypting the requested data block with the public key and transmitting the data block encrypted with the public key.

2. Network node (100) according to claim 1, wherein the network node (100) is a network node of a blockchain network and stores the data blocks in encrypted form in the blockchain.

3. Network node (100) according to claim 1 or 2, wherein the network node (100) is configured to receive second field device data for identifying the first field device data stored in the blocks and to store the second field device data in unencrypted form together with the first field device data; and wherein the second field device data is publicly visible for the purpose of generating a data block request.

4. Network node (100) according to any of the preceding claims, wherein the data block request is a blockchain transaction that contains a monetary amount and the public key.

5. Network node (100) according to any one of the preceding claims, wherein the network node (100) is further configured to verify a monetary amount contained in the digital money data and, only if the monetary amount is correct, to encrypt the requested stored data block with the received public key and send it; wherein, if the data block is stored in encrypted form in the blockchain, the network node is configured to first decrypt the requested data block, and then to encrypt the decrypted data block with the received public key and send it in response to the data block request.

6. Network node (100) according to claim 5, wherein the network node (100) is further configured to receive and verify authentication data along with the data block request, and to encrypt and send the data block using the public key only upon successful authentication.

7. Network node (100) according to any one of the preceding claims, wherein the network node is configured to encrypt a plurality of data blocks in the blockchain and not to encrypt a plurality of data blocks in the blockchain; and wherein the digital monetary amount is verified only for the data blocks encrypted in the blockchain.

8. Network node (100) according to any of the preceding claims, wherein the network node (100) receives a data block request from a user or multiple data block requests for the same data block from multiple users.

9. Network node (100) according to any one of the preceding claims, wherein the network node (100) comprises a computing unit on which a smart contract (110) is executed, and wherein the smart contract (110) performs at least the following: storing the data blocks, verifying the digital currency amount, decrypting the stored data blocks in the blockchain, and encrypting the requested data blocks.

10. Field device data network (200), comprising
a network node (100) according to any one of claims 1 through 9;
a field device (102, 102'); and a
user device (104); wherein
the field device (102, 102') is configured to send first field device data and second field device data to the network node (100); and
the user device (104) is configured to send a data block request to the network node (100) and, in response, to receive a requested data block encrypted with a public key of the user device (104), and to decrypt the received data block with the private key of the user device (104).

11. Field device data network (200) according to claim 10, wherein the user device (104) is further configured to request second field device data from the network node (100), and, based on the requested second field device data, to generate a data block request and send it to the network node (100).

12. Field device data network (200) according to claim 10 or 11, wherein the user device is further configured to receive a requested data block and decrypt it using a private key.

13. Method (400) for transmitting a data block containing field device data, comprising the steps in a network node (100):
receiving (404) first field device data;
storing (406) the first field device data in data blocks; and **characterized by** the steps of:
receiving (408) a data block request including a public key and digital currency data;
verifying (410) the digital currency data, and
if the digital currency data is successfully verified, encrypting (414) the requested data block with the public key; and
transmitting (416) the data block encrypted with the public key.

14. Using a network node (100) according to any one of claims 1 through 9 in a field device data network (200) according to any one of claims 10 through 12.

## Revendications

1. Nœud de réseau (100) pour un réseau de données d'appareils de terrain (200), dans lequel le nœud de réseau (100) est configuré pour :
recevoir des premières données d'appareil de terrain ;
stocker les premières données d'appareil de terrain dans des blocs de données,
et **caractérisé en ce que** le nœud de réseau (100) est configuré pour :
recevoir une requête de bloc de données incluant une clé publique et des données monétaires numériques ;
vérifier les données monétaires numériques, et
si la vérification a réussi, répondre à la requête de bloc de données en chiffrant le bloc de données demandé par requête avec la clé publique et en envoyant le bloc de données chiffré avec la clé publique.

2. Nœud de réseau (100) selon la revendication 1, dans lequel le nœud de réseau (100) est un nœud de réseau d'un réseau de chaînes de blocs et stocke les blocs de données sous forme chiffrée dans la chaîne de blocs.

3. Nœud de réseau (100) selon la revendication 1 ou 2, dans lequel le nœud de réseau (100) est configuré pour recevoir des secondes données d'appareil de terrain afin d'identifier les premières données d'appareil de terrain stockées dans les blocs et de stocker les secondes données d'appareil de terrain sous forme non chiffrée avec les premières données d'appareil de terrain ; et dans lequel les secondes données d'appareil de terrain sont visibles publiquement pour générer une requête de bloc de données.

4. Nœud de réseau (100) selon l'une des revendications précédentes, dans lequel la requête de bloc de données est une transaction de chaîne de blocs qui contient une somme d'argent et la clé publique.

5. Nœud de réseau (100) selon l'une des revendications précédentes, dans lequel le nœud de réseau (100) est en outre configuré pour vérifier une somme d'argent contenue dans les données monétaires numériques et pour chiffrer le bloc de données stocké demandé par requête avec la clé publique reçue et l'envoyer uniquement si le montant monétaire est correct, dans lequel, dans le cas où le bloc de données est stocké sous forme chiffrée dans la chaîne de blocs, le nœud de réseau est configuré pour déchiffrer d'abord le bloc de données demandé par requête et chiffrer ensuite le bloc de données déchiffré avec la clé publique reçue et l'envoyer en réponse à la requête de bloc de données.

6. Nœud de réseau (100) selon la revendication 5, dans lequel le nœud de réseau (100) est en outre configuré pour recevoir et contrôler des données d'authentification avec la requête de bloc de données, et pour chiffrer le bloc de données avec la clé publique et l'envoyer uniquement si l'authentification a réussi.

7. Nœud de réseau (100) selon l'une des revendications précédentes, dans lequel le nœud de réseau est configuré pour chiffrer une pluralité de blocs de données dans la chaîne de blocs et pour ne pas chiffrer une pluralité de blocs de données dans la chaîne de blocs ; et dans lequel seul le montant monétaire numérique est vérifié pour les blocs de données chiffrés dans la chaîne de blocs.

8. Nœud de réseau (100) selon l'une des revendications précédentes, dans lequel le nœud de réseau (100) reçoit une requête de bloc de données provenant d'un utilisateur, ou plusieurs requêtes de bloc de données pour le même bloc de données provenant de plusieurs utilisateurs.

9. Nœud de réseau (100) selon l'une des revendications précédentes, dans lequel le nœud de réseau (100) comporte une unité de calcul sur laquelle un contrat intelligent (110) est exécuté, et dans lequel le contrat intelligent (110) réalise au moins le stockage des blocs de données, la vérification du montant monétaire numérique, le déchiffrement des blocs de données stockés dans la chaîne de blocs, et le chiffrement des blocs de données demandés par requête.

10. Réseau de données d'appareils de terrain (200), comportant :
un nœud de réseau (100) selon l'une des revendications 1 à 9 ;
un appareil de terrain (102, 102') ; et
un appareil d'utilisateur (104) ; dans lequel
l'appareil de terrain (102, 102') est configuré pour envoyer des premières données d'appareil de terrain et des secondes données d'appareil de terrain au nœud de réseau (100) ; et
l'appareil d'utilisateur (104) est configuré pour envoyer une requête de bloc de données au nœud de réseau (100) et pour recevoir en réponse un bloc de données demandé par requête chiffré avec une clé publique de l'appareil d'utilisateur (104), et pour déchiffrer le bloc de données reçu avec la clé privée de l'appareil d'utilisateur (104).

11. Réseau de données d'appareil de terrain (200) selon la revendication 10, dans lequel l'appareil d'utilisateur (104) est en outre configuré pour demander par requête des secondes données d'appareils de terrain du nœud de réseau (100) et pour générer une requête de bloc de données sur la base des secondes données d'appareil de terrain demandées par requête et pour l'envoyer au nœud de réseau (100).

12. Réseau de données d'appareils de terrain (200) selon la revendication 10 ou 11, dans lequel l'appareil d'utilisateur est en outre configuré pour recevoir un bloc de données demandé par requête et pour le déchiffrer avec une clé privée.

13. Procédé (400) pour envoyer un bloc de données avec des données d'appareil de terrain, comportant, dans un nœud de réseau (100), les étapes consistant à :
recevoir (404) des premières données d'appareil de terrain ;
stocker (406) les premières données d'appareil de terrain dans des blocs de données, et
**caractérisé par** les étapes consistant à :
recevoir (408) une requête de bloc de données incluant une clé publique et des données monétaires numériques ;
vérifier (410) les données monétaires numériques, et
si la vérification des données monétaires numériques a réussi, chiffrer (414) le bloc de données demandé par requête avec la clé publique et
envoyer (416) le bloc de données chiffré avec la clé publique.

14. Utilisation d'un nœud de réseau (100) selon l'une des revendications 1 à 9 dans un réseau de données d'appareils de terrain (200) selon l'une des revendications 10 à 12.
